# EUROPEAN PATENT SPECIFICATION

(11) **EP 2 547 172 B1**
(45) Date of publication and mention of the grant of the patent: **21.02.2018**
(21) Application number: 12174589.7
(22) Date of filing: 02.07.2012
(51) Int. Cl.: H05B 33/08, G05F 1/455

(54) **Dimmer**
Dimmer
Dimmer

(30) Priority: 12.07.2011 JP 2011153877
(43) Date of publication of application: 16.01.2013
(73) Proprietor: Panasonic Intellectual Property Management Co., Ltd., Osaka-shi, Osaka 540-6207 (JP)
(72) Inventor: Murakami, Yosinobu, Chuo-ku Osaka 540-6207 (JP); Nakagawara, Koji, Chuo-ku Osaka 540-6207 (JP)
(74) Representative: Appelt, Christian W.

(56) References cited:
- JP-A- 2010 192 266

## Description

### Field of the Invention

The present invention relates to a dimmer which dimming-lighting a light source by a phase control.

### Background of the Invention

Conventionally, there has been known a technique in which an AC power source is electrically connected with a triac, i.e., a bidirectional three pole thyristor, for performing an on/off control of the AC power source, and an LED (Light Emitting Diode) lamp is turned on/off by the on/off control of the triac (see, e.g., Japanese Patent Application Publication No. H5-66718 (JP5-66718A)). The conventional example disclosed in JP5-66718A includes a diode bridge circuit for rectifying an AC power received from a triac, which on/off controls an AC power, into a DC power and an LED lamp which is lit using the DC power outputted from the diode bridge circuit.

However, when the phase control is performed on a conduction angle of power source voltage, which is supplied from an external power source to the light source, based on the on/off control by the triac as described above, it is necessary to input a trigger signal to the gate terminal of the triac every predetermined period to turn on the triac. Further, the period at which the trigger signal is outputted needs to correspond a period of the power source voltage from the external power source.

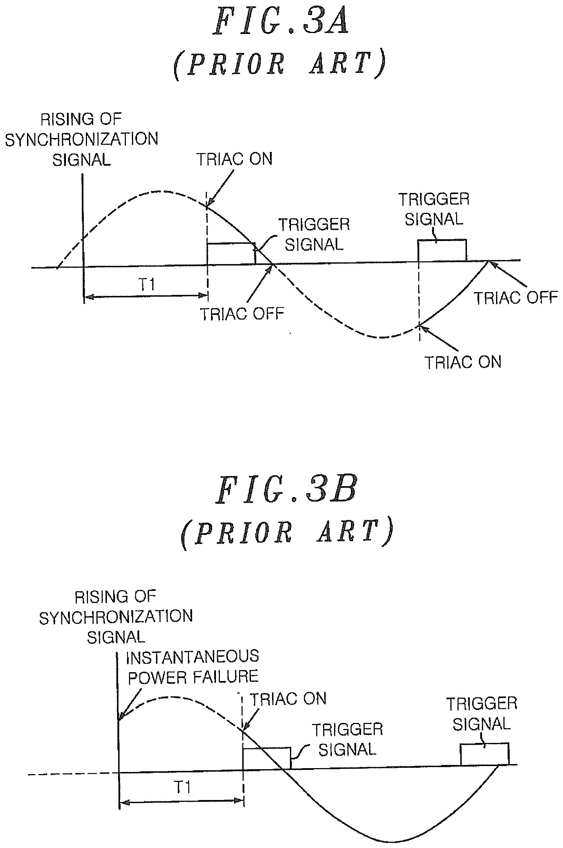

Therefore, the power source voltage from an external power source is monitored, a synchronization signal is driven when the power source voltage reaches a predetermined voltage, and a trigger signal is outputted based on the rising timing of the synchronization signal. In detail, as shown in Fig. 3A, a trigger signal is outputted when a predetermined time T1 has elapsed after the rising time of the synchronization signal. As described above, when a trigger signal is outputted based on the rising timing of the synchronization signal, the period at which the trigger signal is outputted can correspond to the period of the power source voltage from the external power source.

However, as shown in Fig. 3B, when the power source voltage from the external power source varies due to instantaneous power failure, the time when the power source voltage from the external power source reaches a predetermined voltage changes from a normal time, so that the rising timing of the synchronization signal changes from a normal timing. In this case, the output timing of the trigger signal also changes from its normal timing.

Further, there may be a problem in that, depending on the output timing of trigger signal, the triac is not switched to a non-conducting state (turned off) even when the power source voltage from the external power source is zero crossed and therefore the triac continues to be turned on during a subsequent half period of the power source voltage. When the power source voltage from the external power source varies due to instantaneous power failure, the output timing of the trigger signal changes from the normal timing, as described above. As a result, the triac is not appropriately turned on or off and unexpected dimming may be performed, which causes flicker of a light source.

JP 2010/192266 discloses a dimmer and aims to ensuring that a supply power necessary for stable operation of a lighting device can be applied, while dimming signals are transferred through a power source line. A bidirectional thyristor T54 lies in the way of the power source line 811 supplying alternating-current power to a lighting device 300. A zero-cross detection circuit 120 detects voltage zero-cross of the alternating-current power source AC. A switch control circuit 140 has a dimming-degree directing period consisting of a period of conducting the bidirectional thyristor 54 and a period of insulating the bidirectional thyristor 54 in one half-cycle period, and a power-feeding period for conducting the bidirectional thyristor 54 continuously during one half-cycle period.

### Summary of the Invention

In view of the above, the present invention provides a dimmer which is capable of preventing flicker of a light source in a case where the power source voltage from an external power source varies due to instantaneous power failure.

The invention is defined by independent claim 1. Advantageous embodiments of the invention are subject to the dependent claims.

In accordance with an aspect of the present invention, there is provided a dimmer including: a switching element connected to a lighting apparatus using a solid-state light emitting element as a light source and an external power source, in series; a phase detection circuit for outputting a synchronization signal when a power source voltage from the external power source reaches a predetermined voltage; and a control circuit for generating a trigger signal which varies a conduction angle of the power source voltage that is supplied from the external power source to the lighting apparatus in such a way as to switch on or off the switching element.

The control circuit generates the trigger signal based on a rising edge of the synchronization signal and stops generating the trigger signal when a time interval between two subsequent rising edges of the synchronization signal is out of a reference range.

The reference range may be a period of the power source voltage from the external power source ± 2 ms.

The present invention has the advantage of preventing flicker of a light source in the case where the power source voltage of an external power source varies due to instantaneous power failure.

### Brief Description of the Drawings

The objects and features of the present invention will become apparent from the following description of preferred embodiments given in conjunction with the accompanying drawings, in which:
Figs. 1A and 1B are views illustrating a dimmer in accordance with an embodiment of the present invention, wherein Fig. 1A is a schematic circuit diagram and Fig. 1B is a waveform diagram illustrating the operation of the dimmer;
Fig. 2 is a schematic diagram of the lighting apparatus shown in Fig. 1A; and
Figs. 3A and 3B are operational waveform diagrams illustrating the problems of a conventional dimmer, wherein Fig. 3A is a diagram illustrating a normal case and Fig. 3B is a diagram illustrating a case where the power source voltage from an external power source varies due to instantaneous power failure.

### Detailed Description of the Embodiments

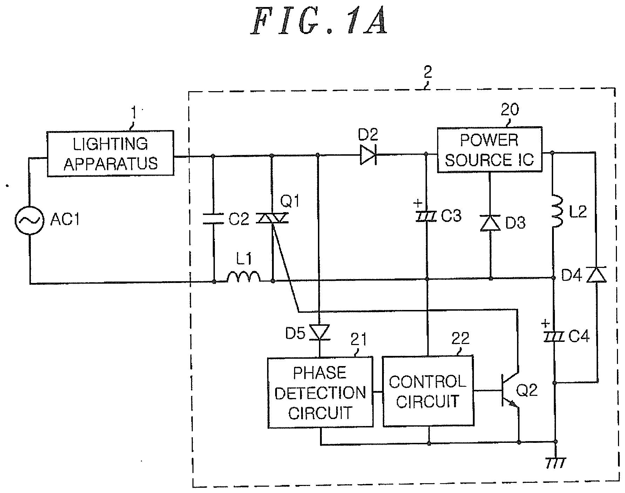

An embodiment of a dimmer in accordance with the present invention will be described with reference to the accompanying drawings which form a part hereof. A dimmer 2 in accordance with the present embodiment changes a conduction angle of power source voltage, which is supplied from a commercial power source (external power source) AC1 to a lighting apparatus 1 including a light source 10, by a phase control, as shown in Figs. 1A to 2.

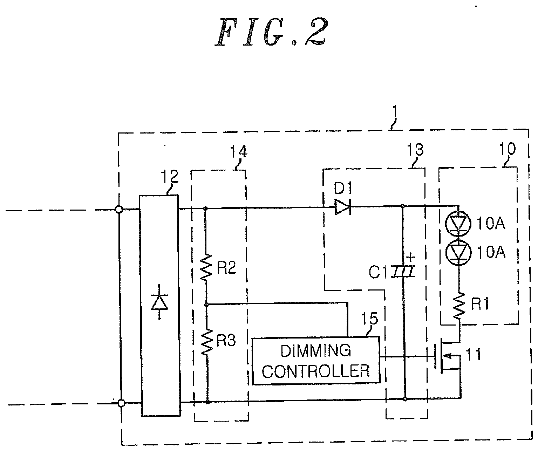

As shown in Fig. 2, the lighting apparatus 1 includes a light source 10 which has light emitting diodes 10A, i.e., solid-state light emitting elements connected in series, and a resistance R1 for restricting a current, and a dimming switch 11 which is connected to the light source 10 in series and is configured to be switched on or off to supply a power to the light source 10. The lighting apparatus 1 further includes a rectifier 12 which rectifies an AC voltage supplied from the commercial power source AC1, a smoothing unit 13 which smoothes an output from the rectifier 12 to transfer the resultant voltage to the light source 10, and a voltage detector 14 which detects the voltage outputted from the rectifier 12. The lighting apparatus 1 further includes a dimming controller 15 which detects a conduction angle based on a period for which the voltage is detected by the voltage detector 14 based and switches on or off the dimming switch 11 at a duty ratio based on the conduction angle, so that the light source 10 is dimmed.

The rectifier 12 includes a diode bridge which performs full-wave rectification on the AC voltage supplied from the commercial power source AC1. The smoothing unit 13 includes a diode D1 and a smoothing capacitor C1 which is connected between the output terminals of the rectifier 12 via the diode D1. The voltage detector 14 is formed of a serial circuit having resistances R2 and R3 which are connected between the output terminals of the rectifier 12. Therefore, the output voltage of the rectifier 12 is divided by the resistances R2 and R3 in the voltage detector 14, and the dimming controller 15 detects the conduction angle based on the electrical potential at a connection point between the resistances R2 and R3.

As shown in Fig. 1A, the dimmer 2 includes a capacitor C2 and an inductor L1 which are connected to input terminals of the dimmer 2 to form a filter for preventing a noise and a triac Q1 (switching element) which is a bi-directional switching element having a self-sustaining function. When the triac Q1 is at a conducting state (i.e., triac Q1 is turned on), an AC power is supplied to the lighting apparatus 1 from the commercial power source AC1. The dimmer 2 further includes a smoothing capacitor C3 which smoothes an AC voltage supplied from the commercial power source AC1 via the diode D2. The dimmer 2 further includes a power source IC (Integrated Circuit) 20 which converts a voltage outputted from the smoothing capacitor C3 into a positive voltage. The power source IC 20 is a switching power source, and a diode D3 is connect to a ground terminal thereof.

The output terminal of the power source IC 20 is connected to a closed circuit which includes an inductor L2, a capacitor C4 and a diode D4. The closed circuit charges the capacitor C4 with a flyback current which flows through the inductor L2 and causes the electrical potential of the gate terminal of the triac Q1 to be lower than those of two remaining main terminals. That is, the capacitor C4 is a control power source which is necessary to control the conduction and non-conduction of the triac Q1.

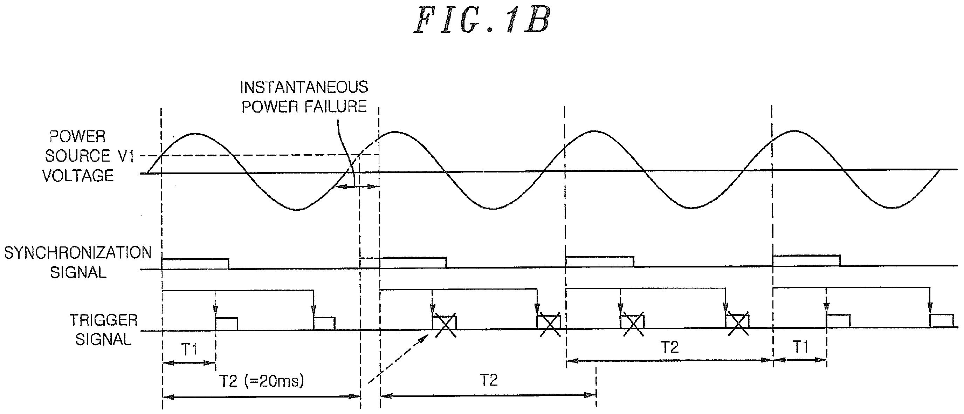

The output terminal of the triac Q1 is connected to a phase detection circuit 21 via a diode D5. The phase detection circuit 21 generates a synchronization signal based on the phase of the power source voltage supplied from the commercial power source AC1 and outputs the generated synchronization signal to a control circuit 22, which will be described later. In the present embodiment, the phase detection circuit 21 compares the power source voltage from the commercial power source AC1 with a predetermined voltage V1 and drives the synchronization signal when the power source voltage from the commercial power source AC1 is higher than the corresponding voltage V1, as shown in Fig. 1B. The synchronization signal falls when the power source voltage from the commercial power source AC1 is lower than the predetermined voltage V1. Further, in Fig. 1B, the solid line indicates the power source voltage from the commercial power source AC1.

Since the input voltage of the phase detection circuit 21 is obtained by performing half-wave rectification on the power source voltage from the commercial power source AC1, the phase detection circuit 21 detects the power source voltage being higher than the predetermined voltage V1 once every period of the power source voltage of the commercial power source AC1. That is, the phase detection circuit 21 in accordance with the present embodiment outputs the synchronization signal only once every period of the power source voltage of the commercial power source AC1.

The gate terminal of the triac Q1 is connected to a switching element Q2. The switching element Q2 is an NPN type transistor, and a collector terminal of the switching element Q2 is connected to the gate terminal of the triac Q1. Further, an emitter terminal of the switching element Q2 is connected to the capacitor C4, and the base terminal thereof is connected to the control circuit 22.

The control circuit 22 generates a trigger signal used to switch on or off the switching element Q2 based on the synchronization signal inputted from the phase detection circuit 21 and a dimming signal inputted from the operational unit (not shown) of the dimmer 2 (see Fig. 1B). A trigger signal generation timing is determined based on a rising timing of synchronization signal. In the present embodiment, when a predetermined time T1 has elapsed after the rising time of synchronization signal, a first trigger signal is generated and rises. Further, after the first trigger signal had been generated and then a half period of the power source voltage from the commercial power source AC1 has elapsed, a second trigger signal is generated and rises. That is, in the present embodiment, two trigger signals are generated based on a single synchronization signal every period of the power source voltage from the commercial power source AC1.

The trigger signal is inputted to the base terminal of the switching element Q2. When the trigger signal is at a high level, the switching element Q2 is switched on, and the potential of the gate terminal of the triac Q1 is lower than those of the two remaining main terminals, so that a current flows through the gate terminal and the triac Q1 gets into a conducting state.

Further, the trigger signal rising time, i.e., the predetermined time T1, is changed in response to the dimming signal which is transmitted from the operational unit of the dimmer 2. For example, when a dimming ratio is high, the predetermined time T1 is decreased, so that a pulse width of the trigger signal is increased. In contrast, when the dimming ratio is low, the predetermined time T1 is increased, so that the pulse width of the trigger signal is decreased. Accordingly, a period, for which the power source voltage applied to the lighting apparatus 1 is conducted, varies, and therefore the light source 10 can be dimmed.

Further, the control circuit 22 monitors the rising interval of the synchronization signal being inputted. Here, the rising interval of the synchronization signal is a period from the previous rising of the synchronization signal to the current rising of the synchronization signal. The rising interval of the synchronization signal is normally almost identical to the period of the power source voltage from the commercial power source AC1. In the present embodiment, since a frequency of the power source from the commercial power source AC1 is 50 Hz, the reference value T2 of the rising interval of the synchronization signal is set to 1/50 = 20 ms which is the period of the power source voltage. When the rising interval of the synchronization signal is out of a predetermined reference range, the control circuit 22 stops generating the trigger signal. In the present embodiment, the reference range is set to "reference value T2 ± 0.8 ms." Therefore, when the rising interval of the synchronization signal is, e.g., 21 ms or 19 ms, the control circuit 22 stops generating the trigger signal.

The operation of the present embodiment will be described with reference to Figs. 1A and 1B below. First, the phase detection circuit 21 detects the power source voltage from the commercial power source AC1, generates a synchronization signal and outputs the synchronization signal to the control circuit 22. The control circuit 22 generates a trigger signal based on the rising of the synchronization signal inputted and outputs the trigger signal to the base terminal of the switching element Q2. Accordingly, with the rising of the trigger signal, the switching element Q2 is switched on, so that the triac Q1 gets into the conducting state (the triac Q1 is turned on). Therefore, the power source voltage from the commercial power source AC1 is applied to the lighting apparatus 1.

Thereafter, when the trigger signal falls, the switching element Q2 is switched off, so that a current does not flow through the gate terminal of the triac Q1. When a current which is equal to or higher than a predetermined current (so-called holding current) flows through the triac Q1, the triac Q1 maintains the conducting state. Therefore, the power source voltage from the commercial power source AC1 continues to be applied to the lighting apparatus 1 for a while even after the trigger signal has fallen. In addition, when the power source voltage from the commercial power source AC1 reaches zero cross, the current which flows through the triac Q1 is equal to or lower than the holding current and the triac Q1 gets into a non-conducting state (the triac Q1 is turned off). Therefore, the application of the power source voltage from the commercial power source AC1 to the lighting apparatus 1 is stopped.

In the lighting apparatus 1, the dimming controller 15 detects the conduction angle based on the period for which voltage has been detected by the voltage detector 14. Further, the dimming controller 15 causes the light source 10 to be dimmed in such a way as to switch on or off the dimming switch 11 at a duty ratio based on the detected conduction angle.

Further, as shown in Fig. 1B, it is assumed that the power source voltage from the commercial power source AC1 varies due to instantaneous power failure and the output of the commercial power source AC1 stops for a predetermined period. In this case, the synchronization signal does not rise at a rising timing of the synchronization signal at a normal time, and the synchronization signal rises at a time at which the output of the commercial power source AC1 is restored. Therefore, the rising timing of the synchronization signal after the instantaneous power failure does not coincide with the rising timing of the synchronization signal at the normal time.

The control circuit 22 monitors the interval between the rising of the synchronization signal before the instantaneous power failure and the rising of the synchronization signal after the instantaneous power failure and stops generating the trigger signal when it is determined that the corresponding interval is out of the reference range. In the present embodiment, since the rising deviation of the synchronization signal is beyond ±0.8 ms, the control circuit 22 stops generating the trigger signal. That is, when instantaneous power failure occurs, the dimmer 2 temporarily stops diming the lighting apparatus 1. Furthermore, when it is determined that the rising interval of the synchronization signal returns to be in the reference range, the control circuit 22 generates the trigger signal and causes the dimmer 2 to restart dimming the lighting apparatus 1.

As described above, in the present embodiment, when the power source voltage from the commercial power source AC1 varies due to instantaneous power failure and the rising interval of the synchronization signal is out of the reference range, the control circuit 22 stops generating the trigger signal and causes the dimmer 2 to temporarily stop dimming the lighting apparatus 1. Therefore, in the present embodiment, unexpected dimming are not performed after instantaneous power failure has occurred, and thus, flicker of the light source 10 can be prevented when the power source voltage from the commercial power source AC1 varies due to instantaneous power failure.

Further, although in the present embodiment, the reference range of the rising interval of the synchronization signal is set to reference value T2 ± 0.8 ms as described above, it is not limited thereto and the reference range may be set to other values. Preferably, the reference range of the rising interval of the synchronization signal may be set to "reference value T2 ± 2 ms", i.e., "reference value T2 - 2 ms ≤ reference range ≤ reference value T2 + 2 ms".

Furthermore, although in the present embodiment, the triac Q1 is used as a switching element for allowing or cutting off the power source voltage supplied from an external power source to the lighting apparatus, other switching elements, e.g., a Field Effect Transistor (FET) or the like may be used.

While the invention has been shown and described with respect to the embodiments, the present invention is not limited thereto. It will be understood by those skilled in the art that various changes and modifications may be made without departing from the scope of the invention as defined in the following claims.

## Claims

1. A dimmer (2), comprising:
a switching element (Q1) connected to a lighting apparatus (1) using a solid-state light emitting element (10) as a light source and an external power source (AC1), in series;
a phase detection circuit (21) for outputting a synchronization signal when a power source voltage from the external power source (AC1) reaches a predetermined voltage (V1); and
a control circuit (22) for generating a trigger signal which varies a conduction angle of the power source voltage that is supplied from the external power source (AC1) to the lighting apparatus (1) by switching on or off the switching element,
**characterized in that**
the control circuit (22) is adapted to generate the trigger signal based on a rising edge of the synchronization signal and to stop generating the trigger signal when a time interval between two subsequent rising edges of the synchronization signal is out of a reference range.

2. The dimmer of claim 1, wherein the reference range is a period of the power source voltage from the external power source ± 2 ms.

3. The dimmer of claim 1 or 2, wherein the control circuit (22) is adapted to generate the trigger signal when a predetermined time (T1) has elapsed after the rising edge of the synchronization signal, wherein the predetermined time is changed according to a dimming signal.

4. The dimmer of one of claims 1 to 3, wherein the control circuit (22) is adapted to stop generating the trigger signal when the time interval is out of said reference range so that the dimmer (2) temporarily stops dimming the lighting apparatus (1).

## Patentansprüche

1. Dimmer (2), Folgendes umfassend:
ein Schaltelement (Q1), welches mit einer Beleuchtungsvorrichtung (1), welche ein lichtemittierendes Halbleiterelement (10) als eine Lichtquelle und eine externe Stromquelle (AC1) verwendet, in Reihe geschaltet verbunden ist;
einen Phasendetektionsschaltkreis (21) zum Ausgeben eines Synchronisationssignals, wenn eine Stromquellenspannung aus der externen Stromquelle (AC1) eine vorgegebene Spannung (V1) erreicht; und
eine Steuerungsschaltung (22) zum Erzeugen eines Triggersignals, welches einen Leitwinkel der Stromquellenspannung, welche aus der externen Stromquelle (AC1) an die Beleuchtungsvorrichtung (1) geliefert wird, durch Ein- oder Ausschalten des Schaltelements variiert,
**dadurch gekennzeichnet, dass**
die Steuerungsschaltung (22) eingerichtet ist, das Triggersignal auf der Grundlage einer ansteigenden Flanke des Synchronisationssignals zu erzeugen und ein Erzeugen des Triggersignals zu stoppen, wenn ein Zeitintervall zwischen zwei nachfolgenden ansteigenden Flanken des Synchronisationssignals außerhalb eines Referenzbereichs liegt.

2. Dimmer nach Anspruch 1, wobei der Referenzbereich eine Periode der Stromquellenspannung aus der externen Stromquelle ± 2 ms ist.

3. Dimmer nach Anspruch 1 oder 2, wobei die Steuerungsschaltung (22) eingerichtet ist, das Triggersignal zu erzeugen, wenn eine vorgegebene Zeit (T1) nach der ansteigenden Flanke des Synchronisationssignals abgelaufen ist, wobei die vorgegebene Zeit gemäß einem Dimmsignal verändert wird.

4. Dimmer nach einem der Ansprüche 1 bis 3, wobei die Steuerungsschaltung (22) eingerichtet ist, ein Erzeugen des Triggersignals zu stoppen, wenn das Zeitintervall außerhalb des Referenzbereichs liegt, so dass der Dimmer (2) ein Dimmen der Beleuchtungsvorrichtung (1) vorübergehend stoppt.

## Revendications

1. Variateur (2), comprenant :
un élément de commutation (Q1) relié à un appareil d'éclairage (1) qui utilise un élément électroluminescent à semi-conducteurs (10) comme source de lumière et une source d'alimentation externe (AC1), en série ;
un circuit de détection de phase (21) destiné à délivrer un signal de synchronisation lorsqu'une tension de source d'alimentation qui provient d'une source d'alimentation externe (AC1) atteint une tension prédéterminée (V1) ; et
un circuit de commande (22) destiné à générer un signal de déclenchement qui fait varier un angle de conduction de la tension de source d'alimentation qui est fournie par la source d'alimentation externe (AC1) à l'appareil d'éclairage (1) en activant ou en désactivant l'élément de commutation,
**caractérisé en ce que**
le circuit de commande (22) est adapté pour générer le signal de déclenchement sur la base d'un front montant du signal de synchronisation et pour arrêter de générer le signal de déclenchement lorsqu'un intervalle de temps entre deux fronts montants ultérieurs du signal de synchronisation se trouve en-dehors d'une plage de référence.

2. Variateur selon la revendication 1, dans lequel la plage de référence est une période de la tension de source d'alimentation fournie par la source d'alimentation externe égale à ± 2 ms.

3. Variateur selon la revendication 1 ou 2, dans lequel le circuit de commande (22) est adapté pour générer le signal de déclenchement lorsqu'une durée prédéterminée (T1) s'est écoulée après le front montant du signal de synchronisation, dans lequel la durée prédéterminée est modifiée selon un signal de variation.

4. Variateur selon l'une des revendications 1 à 3, dans lequel le circuit de commande (22) est adapté pour arrêter de générer le signal de déclenchement lorsque l'intervalle de temps se trouve en-dehors de ladite plage de référence de sorte que le variateur (2) arrête temporairement de faire varier l'appareil d'éclairage (1).
